# EUROPÄISCHE PATENTSCHRIFT

(11) **EP 4 249 949 B1**
(45) Veröffentlichungstag und Bekanntmachung des Hinweises auf die Patenterteilung: **13.03.2024**
(21) Anmeldenummer: 22164401.6
(22) Anmeldetag: 25.03.2022
(51) Int. Cl.: G01S 7/487, G01S 17/42, G01S 7/48

(54) **ERFASSUNG UND ABSTANDSBESTIMMUNG EINES OBJEKTS**
DETECTION OF AN OBJECT AND DISTANCE MEASUREMENT
DÉTECTION ET DÉTERMINATION DE LA DISTANCE D'UN OBJET

(43) Veröffentlichungstag der Anmeldung: 27.09.2023
(73) Patentinhaber: SICK AG, 79183 Waldkirch (DE)
(72) Erfinder: Clemens, Klaus, 79367 Weisweil (DE); Marra, Martin, 79280 Au (DE); Michalski, Christoph, 79104 Freiburg (DE)

(56) Entgegenhaltungen:
- EP-B1- 3 770 633
- WO-A1-2018/127789
- US-A1- 2018 364 340

## Beschreibung

Die Erfindung betrifft einen entfernungsmessenden optoelektronischen Sensor und ein Verfahren zur Erfassung und Abstandsbestimmung eines Objekts in einem Überwachungsbereich nach dem Oberbegriff von Anspruch 1 beziehungsweise 14.

Für eine optische Entfernungsbestimmung wird oftmals die Laufzeit eines Lichtsignals gemessen, die über die Lichtgeschwindigkeit der Entfernung entspricht. Nach dem Tastprinzip wird ein Lichtstrahl in den Überwachungsbereich ausgesandt und der von Objekten zurückgeworfene Lichtstrahl wieder empfangen, um dann das Empfangssignal elektronisch auszuwerten. Um den Messbereich zu erweitern, kann der Abtaststrahl bewegt werden, wie dies in einem Laserscanner geschieht. Dort überstreicht ein von einem Laser erzeugter Lichtstrahl mit Hilfe einer Ablenkeinheit periodisch den Überwachungsbereich. Zusätzlich zu der gemessenen Abstandinformation wird aus der Winkelstellung der Ablenkeinheit auf die Winkellage des Objektes geschlossen, und damit ist der Ort eines Objektes in dem Überwachungsbereich in zweidimensionalen Polarkoordinaten erfasst. Eine andere Möglichkeit zur Messbereichserweiterung besteht darin, zugleich mehrere Messpunkte mit mehreren Abtaststrahlen zu erfassen. Das lässt sich auch mit einem Laserscanner kombinieren, der dann nicht nur eine Überwachungsebene erfasst, sondern über eine Vielzahl von Überwachungsebenen einen dreidimensionalen Raumbereich. In den meisten Laserscannern wird die Abtastbewegung durch einen Drehspiegel erreicht. Gerade bei Verwendung mehrerer Abtaststrahlen ist aber im Stand der Technik auch bekannt, stattdessen den gesamten Messkopf mit Lichtsendern und Lichtempfängern rotieren zu lassen. Ein Mehrlagenscanner wird beispielsweise in EP 3 518 000 A1 beschrieben.

Um aus dem zu erfassenden Empfangslicht ein elektrisches Signal zu erzeuge, genügt die Nachweisempfindlichkeit einfacher Photodioden in vielen Anwendungsfällen nicht. In einer Lawinenphotodiode (APD, Avalanche Photo Diode) löst das einfallende Licht einen kontrollierten Lawinendurchbruch (Avalanche Effect) aus. So werden die von einfallenden Photonen erzeugten Ladungsträger vervielfacht, und es entsteht ein Photostrom, der zu der Lichtempfangsintensität proportional, dabei aber wesentlich größer ist als bei einer einfachen PIN-Diode. Im sogenannten Geiger-Modus ist die Lawinenphotodiode oberhalb der Durchbruchspannung vorgespannt, so dass bereits ein einziger, durch ein einzelnes Photon freigesetzter Ladungsträger eine Lawine auslösen kann, die dann aufgrund der hohen Feldstärke sämtliche verfügbaren Ladungsträger rekrutiert. Die Lawinenphotodiode zählt somit wie der namensgebende Geigerzähler Einzelereignisse. Lawinenphotodioden im Geiger-Modus werden auch als SPAD (Single-Photon Avalanche Diode) bezeichnet.

Geiger-APDS oder SPADs sind also sehr schnelle, hochempfindliche Photodioden auf Halbleiterbasis. Ein Nachteil der hohen Empfindlichkeit ist, dass nicht nur ein Nutzlichtphoton, sondern auch ein schwaches Störereignis durch Fremdlicht, optisches Übersprechen oder Dunkelrauschen den Lawinendurchbruch auslösen kann. Dieses Störereignis trägt dann mit dem gleichen relativ starken Signal zum Messergebnis bei wie das empfangene Nutzlicht und ist davon auch aus dem Signal heraus nicht unterscheidbar. Anschließend bleibt die Lawinenphotodiode für eine Totzeit von ca. 5 bis 100 ns unempfindlich und fällt so lange für weitere Messungen aus. Deshalb ist es üblich, mehrere SPADs zusammenzuschalten und statistisch auszuwerten. Eine Bezeichnung für einen Lichtempfänger mit mehreren zusammengeschalteten SPADs bei Ausgabe eines Summensignals ist SiPM (Silicon Photo Multiplier), wobei Silizium nur der gängige, nicht aber einzige zugrundeliegende Halbleiter ist.

Durch eine Lichtlaufzeitmessung mit kurzen Pulsen ist eine sehr hohe Auflösung und Messgenauigkeit erreichbar. Durch Auslösen der SPAD-Zellen beispielsweise in einem SiPM entsteht als Ausgangssignal eine schnelle Flanke, die üblicherweise für die Distanzmessung genutzt wird. Sofern eine entsprechende hochfrequenztaugliche Empfangselektronik vorhanden ist, können die Empfangspulse präzise in der Zeit lokalisiert werden.

Ein SPAD-basierter Lichtempfänger deckt einen hohen Dynamikbereich ab. Hat eine Zelle einmal ausgelöst, so trägt sie ihren Lawinenstrom bei und geht dann in die Totzeit über. Etwas vereinfachend ausgedrückt reagieren bereits ab einer gewissen Remission eines angetasteten Objekts in einem gewissen Abstand nahezu alle Zellen mit ihrem Lawinenstrom, so dass ein noch stärkeres Lichtsignal beispielsweise von einem Reflektor beziehungsweise einem näheren Objekt kaum noch zusätzlichen Zellen rekrutieren kann. Daraus ergibt sich eine inhärente Dynamikkompression.

Diese Dynamikkompression ist einerseits erwünscht, weil sie das Übersteuern nachfolgender Stufen und damit eine Verzerrung des Empfangssignals verhindert. Allerdings geht dadurch auch Information über die Signalform und Signalstärke des einfallenden Lichts verloren. Die Amplitude des elektronischen Empfangssignals entspricht nur sehr eingeschränkt der Intensität des Lichts, nämlich in einem Bereich schwächerer Signale, bei denen noch ausreichend freie Zellen zur Verfügung stehen. Deshalb lässt sich auf diesem Weg beispielsweise ein Reflektor nicht von einem weißen Ziel unterscheiden. Außerdem ist ohne Kenntnis der Signalstärke natürlich auch nicht möglich, hieraus Korrekturgrößen für die gemessene Lichtlaufzeit abzuleiten.

Es gibt noch zwei weitere Effekte, die eine Anzahl jeweils noch für die Erfassung zur Verfügung stehender Zellen begrenzen und die den Verlauf des Empfangssignals beeinflussen. Das ist zum einen auf den Lichtempfänger fallendes Fremdlicht, das bereits einen durchaus nennenswerten Anteil der Zellen rekrutieren kann. Zum anderen neigen SPAD-basierte Lichtempfänger, insbesondere im Infrarotbereich empfindliche SiPMs, zu einem sogenannten Nachpulsen. In diesem Wellenlängenbereich wird eine tief im Material befindliche Driftzone benötigt, in der die Lebensdauer der Ladungsträger mitunter länger ist als die Totzeit der SPAD-Zellen. Nach dem Wiederaufladen können insbesondere nach starken Empfangspulsen noch verbleibende Ladungsträger die Zelle sofort erneut auslösen, ohne dass überhaupt Licht einfällt. Das Nachpulsen wird im Stand der Technik als Störeffekt betrachtet und möglichst gering gehalten, wie etwa in der DE 10 2017 118 307 A1 oder der KR 101 381 392 B1. In der EP 3 441 787 A1 wird der Nachpuls wie sonstiges Rauschen behandelt und soll durch mehrere SPAD-Pixel ausgemittelt werden.

Es ist bekannt, zusätzlich zu einer Lichtlaufzeit weitere Größen wie eine Pulsbreite oder Intensität zu messen, um so die Lichtlaufzeit nochmals zu korrigieren. Beispielsweise wird in Laserscannern die Pulsbreite als Zeitintervall zwischen Übersteigen und Unterschreiten einer Schwelle bestimmt. In der EP 1 972 961 A2 wird in einem Pulsmittelungsverfahren aus mehreren Einzelpulsen ein Histogramm aufgebaut und darin ein Maximum oder ein Integral als Maß für die Intensität bestimmt. Die EP 3 059 608 A1 bestimmt den Empfangspegel eines Laserscanners in der Versorgung des Lichtempfängers. Alle diese Ansätze sind aber nicht für SPAD-basierte Lichtempfänger oder SiPMs geeignet, denn sie werten die Amplitude des Empfangssignals aus, die aber wie erläutert aufgrund der Dynamikkompression den Signalverlauf nicht treu genug abbildet.

Die WO 2020/148567 A2 offenbart ein LIDAR, das als Lichtempfänger einen SiPM einsetzt. Mit einem zusätzlichen Sensor werden Objekte außerhalb des Sichtfeldes des LIDARs erkannt, um gegebenenfalls die ausgesandte Energie zu begrenzen. Das ist ein sendeseitiges Eingreifen, das die genannten Nachteile der Dynamikkompression nicht überwindet.

Die WO 2018/127789 A1 offenbart ein LIDAR-System, das Fahrzeuge anhand eines Fingerabdrucks des Reflexionsvermögens an mehreren angetasteten Orten identifiziert, insbesondere eines mittigen hohen Reflexionsvermögens mit seitlichem verringertem Reflexionsvermögen, wie dies an einem Nummernschild erwartet würde. Die gemessenen Signale können in verschiedener Hinsicht korrigiert werden, beispielsweise normiert anhand des gemessenen Abstands oder bezüglich Rauschen auf Basis eines Rauschpegels, wobei Fremdlicht in einer Totzeit des LIDARs gemessen werden kann.

Die EP 3 770 633 B1 befasst sich mit einem mittels Lichtlaufzeitverfahren abstandsmessenden Sensor, der eine analoge Schwelle zur Bewertung des Empfangssignals an den Rauschpegel anpasst. Dafür wird der Rauschpegel mittels Dioden als Annäherung der Quadratwurzel eines Gleichstromanteils des Empfangssignals bestimmt. In einer weiteren Ausführungsform wird der Gleichstromanteil digitalisiert, mit einem digitalen Verfahren die Wurzel gezogen und dieser Wert wieder in eine analoge Spannung für einen die analoge Schwelle setzenden Komparator umgesetzt.

Es ist daher Aufgabe der Erfindung, eine Lichtlaufzeitmessung weiter zu verbessern.

Diese Aufgabe wird durch einen entfernungsmessenden optoelektronischen Sensor und ein Verfahren zur Erfassung und Abstandsbestimmung eines Objekts in einem Überwachungsbereich nach Anspruch 1 beziehungsweise 14 gelöst. Der Sensor weist einen Lichtsender, einen Lichtempfänger mit mindestens einem Lichtempfangselement sowie eine Steuer- und Auswertungseinheit auf, um ein Lichtsignal auszusenden, wieder zu empfangen und durch Auswertung des Empfangssignals die Lichtlaufzeit und damit den Abstand zu einem Objekt zu messen. Das ausgesandte Lichtsignal ist vorzugsweise ein Puls. Das mindestens eine Lichtempfangselement, vorzugsweise eine Vielzahl von Lichtempfangselementen oder Zellen, kann prinzipiell eine APD oder ein sonstiger Lichtdetektor sein. Bevorzugt handelt es sich um ein im Geigermodus betriebenes Lichtempfangselement, also einen SPAD-basierten Lichtempfänger. Insbesondere werden die Photoströme mehrerer solcher Lichtempfangselemente schon früh in der Verarbeitungskette miteinander kombiniert. Ein Beispiel ist eine Umsetzung als Siliziumphotomultiplier (SiPM), der ein quasi-analoges Bauteil darstellt. Zusätzlich zu der Bestimmung der Lichtlaufzeit wird ein Fremdlichtsignal des auf den Lichtempfänger auftreffenden Fremdlichts erfasst. Während der Messung der Lichtlaufzeit wird eine Überlagerung von Nutzlicht und Fremdlicht detektiert. Mit dem Fremdlichtsignal soll nur der Fremdlichtanteil bestimmt werden.

Die Erfindung geht von dem Grundgedanken aus, den Fremdlichtanteil gesondert zu messen. Das Fremdlichtsignal wird in einer Sendepause erfasst, in der der Lichtsender nicht aktiv ist. Dann gibt es keine Überlagerung mit Nutzlicht, das Empfangssignal enthält keinen Nutzlichtanteil beziehungsweise keine Empfangspulse, so dass es als Fremdlichtsignal erfasst werden kann. In einer zeitversetzten, sich vorzugsweise direkt anschließenden Messphase erfolgt eine Lichtlaufzeitmessung bei aktivem Lichtsender, und das Empfangssignal in der Messphase mit einer Überlagerung von Fremdlicht und Nutzlicht wird zur Unterscheidung von dem reinen Fremdlichtsignal als Messsignal bezeichnet. Vorzugsweise wird die Lichtlaufzeit aus der Überlagerung bestimmt, d.h. dem Empfangssignal einschließlich Fremdlichtsignal, somit kein Differenzsignal mit dem Fremdlichtsignal gebildet und auch nicht anderweitig das Fremdlicht in dem Messlicht kompensiert. Die Bestimmung des Fremdlichtsignals hat vielmehr den Zweck, zusätzlich zu der Lichtlaufzeit eine Pegelinformation zu gewinnen. Dazu werden Messsignal und Fremdlichtsignal miteinander verglichen. Damit wird die Intensität beziehungsweise ein Pegel oder eine Pulsenergie des remittierten Lichtsignals bewertet und so die gesuchte Pegelinformation ermittelt.

Die Erfindung hat den Vorteil, dass trotz einer Dynamikkompression insbesondere SPAD-basierter Lichtempfänger mit limitierter Bandbreite wegen der Anzahl an verfügbaren SPAD-Zellen eine Pegelinformation erfassbar wird, und dies auch bei Sättigungs- oder Nachpulseffekten. Die Pegelinformation wiederum ist je nach Ausführungsform für sich als weitere Messgröße neben dem Abstand von Interesse und/oder wird intern verwendet, beispielsweise um Korrekturen oder Anpassungen der Laufzeitbestimmung vorzunehmen und so eine verbesserte Messgenauigkeit zu erreichen. Der Sensor behält dabei eine Mehrechofähigkeit, d.h. die separate Messbarkeit für hintereinander liegende Objekte im Falle von Teiltransparenz, etwa wenn ein Objekt hinter einer Glasscheibe angeordnet ist, oder bei Kantentreffern, wo jeweils ein Teil des Sendelichtquerschnitts auf hintereinander liegende Objekte fällt.

Die Steuer- und Auswertungseinheit ist bevorzugt dafür ausgebildet, anhand der Pegelinformation festzustellen, ob das Objekt ein Reflektor ist. Die Pegelinformation ist das Ergebnis eines Vergleichs zwischen dem Messsignal, d.h. der Überlagerung von Fremdlicht mit Nutzlicht, und dem Fremdlichtsignal allein. Damit erlaubt die Pegelinformation eine Aussage über die Stärke des Nutzlichtsignals oder Empfangspulses. Bei einem natürlichen Ziel oder Objekt ist der Nutzlichtbeitrag gering. Ein hoher Pegel kann daher als Erkennungszeichen für einen Reflektor genutzt werden. Der Sensor erhält auf diese Weise eine Reflektorerkennung. Die Reflektorerkennung kann eine zusätzliche Ausgabegröße erzeugen. In einigen Anwendungen, beispielsweise in der Navigation, werden damit Reflektoren als besondere, künstliche Ziele oder Landmarken identifiziert. Die Reflektorinformation kann auch intern verwendet werden, beispielsweise damit die Lichtlaufzeitbestimmung angepasst werden, je nachdem, ob ein Reflektor oder ein anderes Objekt angetastet ist.

Die Steuer- und Auswertungseinheit ist bevorzugt dafür ausgebildet, die Pegelinformation mit einer Reflektorschwelle zu vergleichen. Das ist ein einfaches und sehr klares Kriterium, um die Anwesenheit eines Reflektors zu erkennen. Eine überschwellige Pegelinformation wird als erkannter Reflektor aufgefasst, eine unterschwellige Pegelinformation als natürliches Ziel, sofern überhaupt ein Entfernungswert bestimmt werden konnte.

Die Steuer- und Auswertungseinheit ist bevorzugt dafür ausgebildet, die Reflektorschwelle an einen gemessenen Abstand anzupassen. Mit zunehmendem Abstand ist weniger Nutzlicht beziehungsweise sind schwächere Empfangspulse zu erwarten. Dem kann durch eine mit dem jeweils gemessenen Abstand fallende Reflektorschwelle Rechnung getragen werden.

Die Steuer- und Auswertungseinheit ist bevorzugt dafür ausgebildet, aus der Pegelinformation das Remissionsvermögen des Objekts zu bestimmen, insbesondere mit einer Korrektur anhand des gemessenen Abstands. In dieser Ausführungsform wird feiner zwischen helleren und dunkleren Zielen abgestuft und nicht nur binär zwischen Anwesenheit und Abwesenheit eines Reflektors unterschieden. Dabei kann die Information über einen Reflektor zusätzlich erfasst beziehungsweise aus dem Remissionsvermögen gewonnen werden. Das Remissionsvermögen wird vorzugsweise anhand des jeweiligen gemessenen Abstands korrigiert, aus den gleichen Gründen wie eine mögliche abstandsabhängige Anpassung der Reflektorschwelle, denn aus größerer Entfernung kommt bei gleichem Remissionsvermögen weniger Nutzlicht zurück.

Die Steuer- und Auswertungseinheit ist bevorzugt dafür ausgebildet, die Pegelinformation oder eine aus der Pegelinformation abgeleitete Information auszugeben, insbesondere ob das Objekt ein Reflektor ist oder ein Remissionsvermögen des Objekts. Die Pegelinformation ist schon für sich eine interessante Messgröße sein, die zusätzlich zum gemessenen Abstand ausgegeben werden kann. Es ist denkbar, sie vorher aufzubereiten, beispielsweise Einheiten umzurechnen, oder eine aus der Pegelinformation abgeleitete Information auszugeben. Zwei besonders vorteilhafte Aufbereitungen wurden schon genannt, nämlich eine Reflektorinformation und das Remissionsvermögen des angetasteten Objekts. Eine Reflektorinformation kann mit nur einem Bit als Flag für einen erkannten Reflektor ausgegeben werden.

Die Steuer- und Auswertungseinheit ist bevorzugt dafür ausgebildet, die Bestimmung der Lichtlaufzeit auf Basis der Pegelinformation oder einer daraus abgeleiteten Information anzupassen, insbesondere auf Basis der Information, dass das Objekt ein Reflektor ist, oder eines Remissionsvermögens des Objekts. Objekte unterschiedlichen Remissionsvermögens werden scheinbar in unterschiedlichen Entfernungen gemessen. Diese Farb- oder Schwarzweißverschiebung kann durch eine entsprechende Korrektur kompensiert werden. Das ist erfindungsgemäß trotz einer Dynamikkompression möglich, weil die entsprechende Pegelinformation bestimmbar wird. Die erforderlichen Korrekturwerte werden beispielsweise mit einem Graukeilabgleich eingelernt. Es ist möglich, das Verfahren der Bestimmung des Empfangszeitpunkts bei der Lichtlaufzeitbestimmung in Abhängigkeit von der Pegelinformation anzupassen, beispielsweise bei einer hohen Pegelinformation ein anderes Verfahren zu verwenden als bei einer geringen Pegelinformation. Denkbar ist weiterhin, die Information, dass es sich bei dem Ziel um einen Reflektor handelt, gesondert zu behandeln, oder es wird einfach ohne qualitativen Unterschied wie ein hohes Remissionsvermögen betrachtet.

Die Steuer- und Auswertungseinheit ist bevorzugt dafür ausgebildet, das Fremdlichtsignal auszugeben. Wie die Pegelinformation kann auch das Fremdlichtsignal eine außen interessierende Größe sein. Im Falle einer Vielzahl von Lichtempfangselementen oder SPADs beziehungsweise Gruppen davon, insbesondere mehrere SiPMs, kann die Pegelinformation sogar eine Ortsauflösung aufweisen. Das Fremdlichtsignal liefert eine Art passives Kamerabild ohne Beleuchtung. Die Ortsauflösung kann sich durch ein scannendes, auch mehrlagig scannendes Verfahren, über ein größeres Sichtfeld ausdehnen.

Die Steuer- und Auswertungseinheit weist ein Tiefpassfilter mit einer Grenzfrequenz von höchstens 2 MHz auf, dem das Messsignal und das Fremdlichtsignal vor Ermittlung der Pegelinformation zugeführt werden. Es werden also das tiefpassgefilterte Fremdlichtsignal und das tiefpassgefilterte Messsignal verglichen, um die Pegelinformation des remittierten Lichtsignals zu ermitteln. Dabei wird das Messsignal auch noch einem anderen Pfad ohne das Tiefpassfilter zugeführt, denn die Lichtlaufzeitmessung ist auf die schnellen Änderungen beziehungsweise Empfangspulse angewiesen, die durch das Tiefpassfilter ausgefiltert würden. Für die Pegelinformation, insbesondere eine Reflektorerkennung oder Remissionsbestimmung, genügt eine langsamere, summarische Information, die das Tiefpassfilter erzeugt.

Dadurch können kostengünstigere Bausteine mit geringeren Ansprüchen an deren Zeitverhalten verwendet werden, um die Pegelinformation zu ermitteln.

Die Steuer- und Auswertungseinheit ist bevorzugt dafür ausgebildet, als Fremdlichtsignal und Messsignal jeweils einen in dem Lichtempfänger fließenden Strom zu messen. Der Indikator für die Pegelinformation ist damit der Detektorstrom. Vorzugsweise wird dieser Strom ohnehin für eine Strombegrenzung gemessen, die bei starkem Lichteinfall den Strom durch den Lichtempfänger künstlich begrenzt, um das Bauteil vor Überlastung oder Überhitzung zu schützen. Diese Information aus der Strombegrenzung kann dann für die Ermittlung der Pegelinformation ein weiteres Mal ausgenutzt werden.

Die Steuer- und Auswertungseinheit weist bevorzugt einen AD-Wandler auf, um das Messsignal und das Fremdlichtsignal für die Ermittlung der Pegelinformation zu digitalisieren, wobei die Auflösung des AD-Wandlers nicht ausreicht, um einen Empfangszeitpunkt des remittierten Lichtsignals zu bestimmen. Der AD-Wandler ist somit kein hochwertiges, teures Bauteil und könnte die schnellen Empfangssignale oder Empfangspulse für die Lichtlaufzeitmessung nicht erfassen oder jedenfalls nicht hinreichend zeitlich auflösen. Für die Ermittlung der Pegelinformation, vorzugsweise die AD-Wandlung zuvor tiefpassgefilterter Signale, ist diese Auflösung ausreichend, so das mit einer günstigeren Komponente gearbeitet werden kann.

Die Steuer- und Auswertungseinheit weist bevorzugt einen Auswertungskanal für die Bestimmung der Lichtlaufzeit und der Pegelinformation auf, der mittels eines Umschalters mit verschiedenen Lichtempfangselementen oder Gruppen von Lichtempfangselementen verbunden werden kann. Der Sensor misst in dieser Ausführungsform in einer Vielzahl von Empfangskanälen durch mehrere Gruppen von Lichtempfangselementen, SPAD-Zellen oder SiPMs. Für diese Empfangskanäle ist jedoch nur ein Auswertungskanal vorgesehen, oder jedenfalls sind weniger Auswertungskanäle vorgesehen als Empfangskanäle, zwischen denen beispielsweise per Multiplexing umgeschaltet wird. Der Auswertungskanal umfasst jeweils die Ermittlung der Pegelinformation, die folglich mit umgeschaltet wird.

Der Sensor ist bevorzugt als Laserscanner ausgebildet, insbesondere als Mehrlagenscanner, und weist eine bewegliche Ablenkeinheit auf, mit deren Hilfe die Lichtsignale periodisch durch den Überwachungsbereich geführt werden. Die Ablenkeinheit ist in beliebiger Weise beispielsweise als Drehspiegel, jedoch vorzugsweise in Form einer drehbaren Abtasteinheit ausgebildet, die praktisch einen beweglichen Messkopf bildet, in dem der Lichtsender und/oder der Lichtempfänger und bevorzugt auch zumindest Teile der Steuer- und Auswertungseinheit untergebracht sind. Ein Mehrebenen- oder Mehrlagenscanner tastet mit der Bewegung der beweglichen Ablenkeinheit den Überwachungsbereich in mehreren Ebenen ab.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine vereinfachte Blockdarstellung eines optoelektronischen Sensors zur Lichtlaufzeitmessung;
- Fig. 2: eine Schnittdarstellung eines als Laserscanner ausgebildeten optoelektronischen Sensors;
- Fig. 3: eine schematische Darstellung des zeitlichen Ablaufs einer Lichtlaufzeitmessung mit Fremdlichtbestimmung;
- Fig. 4: ein beispielhaftes Blockschaltbild für die Auswertung von einfallendem Licht, um eine Lichtlaufzeit und eine Fremdlicht- beziehungsweise Pegelinformation zu erfassen;
- Fig. 5: ein schematischer zeitlicher Verlauf eines durch den Lichtempfänger fließenden Stroms bei Erfassung eines natürlichen Objekts; und
- Fig. 6: ein schematischer zeitlicher Verlauf eines durch den Lichtempfänger fließenden Stroms bei Erfassung eines Reflektors.

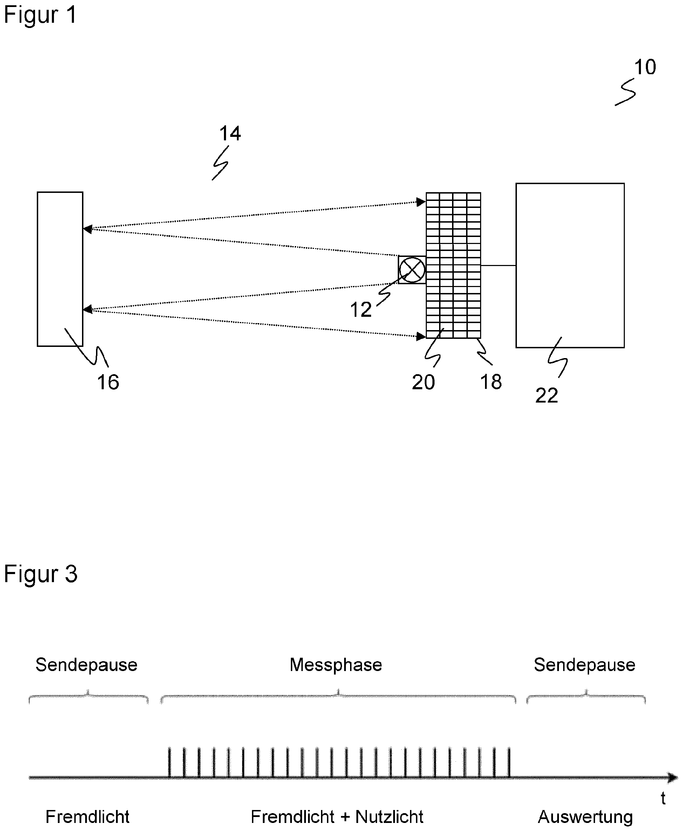

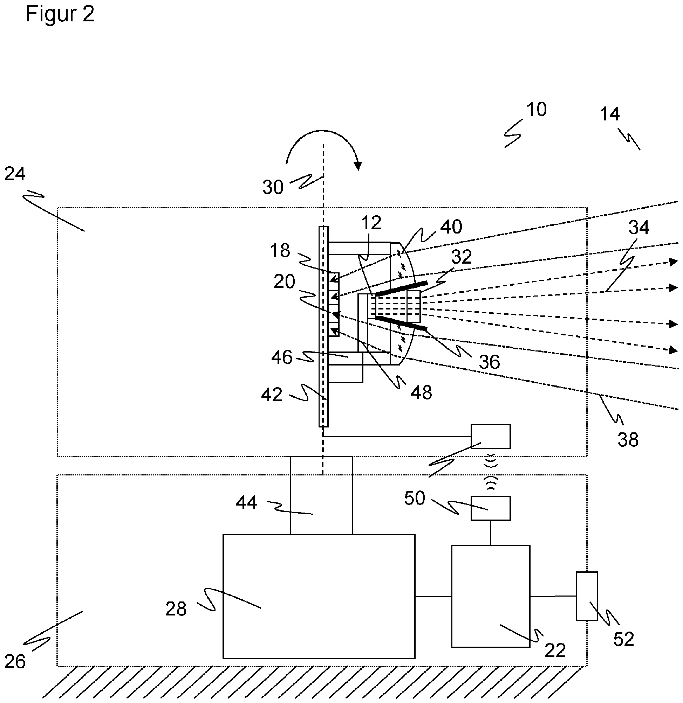

Figur 1 zeigt eine sehr vereinfachte schematische Blockdarstellung eines optoelektronischen Sensors 10 in einer Ausführungsform als einstrahliger Lichttaster. Die Ausführungsform als Lichttaster ist rein beispielhaft. Eine weitere Ausführungsform als Laserscanner wird später noch unter Bezugnahme auf die Figur 2 erläutert. Als weitere Alternative können mehrere Sensoren 10 miteinander verbunden werden, um ein tastendes Lichtgitter mit mehreren, meist parallelen Strahlen zu bilden, welches in jedem Strahl Entfernungen misst oder überwacht. Diese Aufzählung optoelektronischer Sensoren, in denen die Erfindung eingesetzt werden kann, ist nicht abschließend. Auch mobile Systeme sind denkbar, bei denen der Sensor 10 beweglich montiert ist.

Ein Lichtsender 12, beispielsweise eine LED oder eine Laserlichtquelle, sendet ein Lichtsignal, vorzugsweise einen Lichtpuls, in einen Überwachungsbereich 14 aus. Trifft es dort auf ein Objekt 16, so wird ein Teil des Lichtsignals remittiert oder reflektiert und kehrt zu einem Lichtempfänger 18 zurück. Dieser Lichtempfänger 18 weist in dieser Ausführungsform eine Vielzahl von Lichtempfangselementen auf, die als Lawinenphotodiodenelemente 20 im Geigermodus oder SPADs ausgebildet sind. Bevorzugt handelt es sich um einen SiPM (Silicon Photomultiplier). Die Lawinenphotodiodenelemente 20 sind beispielsweise zu einer Matrix, einer Linie oder auch in einem anderen Muster oder irregulär angeordnet. In anderen Ausführungsformen weist der Lichtempfänger 18 keine SPADs auf, sondern andere Lichtempfangselemente, oder es handelt sich um einen Einzelempfänger mit nur einem Lichtempfangselement.

Die Empfangssignale der Lawinenphotodiodenelemente 20 werden von einer Steuer- und Auswertungseinheit 22 ausgelesen und dort ausgewertet. Dazu können die Empfangssignale zu einem Summensignal zusammengefasst werden. Um den Abstand des Objekts 16 zu messen, bestimmt die Steuer- und Auswertungseinheit 22 eine Lichtlaufzeit von Aussenden eines Lichtsignals bis zu dessen Empfang und rechnet dies über die Lichtgeschwindigkeit in einen Abstand um. Als zusätzliche Messgröße und/oder interne Hilfsgröße werden ein Fremdlichtsignal und eine Pegelinformation bestimmt. Dies wird später unter Bezugnahme auf die Figuren 3 bis 6 näher erläutert. Umgekehrt kann die Steuer- und Auswertungseinheit 22 auf Lichtsender 12 und/oder Lichtempfänger 18 einwirken, etwa um das Lichtsignal zu formen und auszulösen oder dessen Eigenschaften festzulegen, oder um Eigenschaften des Lichtempfängers 18 einzustellen.

Die Auftrennung in Lichtempfänger 18 und Steuer- und Auswertungseinheit 22 in Figur 1 ist so auch in der Praxis denkbar, dient aber in erster Linie der Erläuterung. Alternativ werden diese Elemente zumindest teilweise auf einem gemeinsamen Chip integriert, dessen Fläche sich lichtempfindliche Bereiche der Lawinenphotodiodenelemente 20 und einzelnen oder Gruppen von Lawinenphotodiodenelementen 20 zugeordnete Schaltkreise zu deren Auswertung und Ansteuerung teilen. Auch die optische Anordnung mit einem Lichtsender 12, der einen kleinen Anteil des Lichtempfängers 18 verdeckt, ist rein beispielhaft. Alternativ sind andere bekannte optische Lösungen einsetzbar, wie Autokollimation etwa mit einem Strahlteiler und einer gemeinsamen Optik, oder Pupillenteilung, wo zwei getrennte Optiken vorgesehen sind und Lichtsender und Lichtempfänger nebeneinander angeordnet werden.

Figur 2 zeigt eine schematische Schnittdarstellung durch einen optoelektronischen Sensor 10 in einer Ausführungsform als Laserscanner. Dabei sind gleiche oder einander entsprechende Merkmale mit den schon zu Figur 1 eingeführten Bezugszeichen versehen, und nur abweichende Eigenschaften werden noch beschrieben. Der Sensor 10 umfasst in grober Aufteilung eine bewegliche Abtasteinheit 24 und eine Sockeleinheit 26. Die Abtasteinheit 24 ist der optische Messkopf, während in der Sockeleinheit 26 weitere Elemente wie eine Versorgung, Auswertungselektronik, Anschlüsse und dergleichen untergebracht sind. Im Betrieb wird mit Hilfe eines Antriebs 28 der Sockeleinheit 26 die Abtasteinheit 24 in eine Drehbewegung um eine Drehachse 30 versetzt, um so den Überwachungsbereich 14 periodisch abzutasten.

In der Abtasteinheit 24 sind Lichtsender 12 und Lichtempfänger 18 untergebracht. Der Lichtsender 12 weist hier beispielsweise eine LED oder einen Laser in Form eines Kantenemitters oder VCSELs auf und sendet mit Hilfe einer Sendeoptik 32 mehrere Sendelichtstrahlen 34 mit gegenseitigem Winkelversatz in den Überwachungsbereich 14 aus. Die Erzeugung der mehreren Sendelichtstrahlen 34 ist beispielsweise über eine Vielzahl von Lichtquellen und/oder durch optische Elemente wie Strahlteiler, Lichtleiter oder diffraktive Elemente möglich. Zur Vermeidung von Streulicht innerhalb des Sensors 10 kann der interne Lichtweg der Sendelichtstrahlen 34 von einem lichtundurchlässigen Tubus 36 abgeschirmt werden.

Treffen die Sendelichtstrahlen 34 in dem Überwachungsbereich 14 auf ein Objekt, so kehren entsprechende remittierte Lichtstrahlen 38 zu dem Sensor 10 zurück. Die remittierten Lichtstrahlen 38 werden von einer Empfangsoptik 40 auf den Lichtempfänger 18 geführt. Der Lichtempfänger 18 weist mehrere Gruppen von SPADs (Single-Photon Avalanche Diode) beziehungsweise mehrere SiPMs (Silicon Photomultiplier) auf, um die mehreren remittierten Lichtstrahlen 38 zu erfassen. Dabei ist vorzugsweise der Empfangspfad mit der Gestaltung der Empfangsoptik 40 sowie der Anordnung und Ausrichtung von Lichtempfänger 18 und Empfangsoptik 40 so ausgelegt, dass jeweils ein remittierter Lichtstrahl 38 auf eine bestimmte Gruppe von SPADs beziehungsweise ein SiPM fällt. Wechselwirkungen sind aber in der Regel insbesondere nicht für alle Abstände von Objekten zu vermeiden. Das kann ein Grund dafür sein, die remittierten Lichtstrahlen 38 vorzugsweise getrennt in einem Multiplexbetrieb zu empfangen.

Der Lichtempfänger 18 ist in dieser Ausführungsform auf einer Leiterkarte 42 angeordnet, die auf der Drehachse 30 liegt und mit der Welle 44 des Antriebs 28 verbunden ist. Die Empfangsoptik 40 stützt sich durch Beinchen 46 auf der Leiterkarte 42 ab und hält eine weitere Leiterkarte 48 des Lichtsenders 12. Die beiden Leiterkarten 42, 48 sind untereinander verbunden und können auch als gemeinsame Flexprint-Leiterkarte ausgebildet sein.

Der in Figur 2 gezeigte optische Aufbau mit zwei übereinander geschichteten Leiterkarten 42, 48 oder Leiterkartenbereichen und einer zentral innerhalb der Empfangsoptik 40 angeordneten gemeinsamen Sendeoptik 32 ist rein beispielhaft zu verstehen. So wäre alternativ jede andere an sich beispielsweise von eindimensionalen optoelektronischen Sensoren oder Laserscannern bekannte Anordnung wie etwa eine biaxiale Anordnung beziehungsweise Doppelaugenanordnung oder die Verwendung eines Umlenk- oder Strahlteilerspiegels möglich. Weiterhin ist denkbar, Lichtsender 12 und Lichtempfänger 18 auf einer gemeinsamen Leiterkarte zu montieren, bei gegenüber Figur 2 veränderter Anordnung auch auf einer gemeinsamen Leiterkarte, die in nur einer Ebene liegt.

Eine berührungslose Versorgungs- und Datenschnittstelle 50 verbindet die bewegliche Abtasteinheit 24 mit der ruhenden Sockeleinheit 26. Dort befindet sich die Steuer- und Auswertungseinheit 22, die zumindest teilweise auch auf der Leiterkarte 42 oder an anderem Ort in der Abtasteinheit 24 untergebracht sein kann. Zusätzlich zu Steuer- und Auswertungsfunktionen analog zu denjenigen, die zu der Ausführungsform gemäß Figur 1 schon beschrieben wurden, wird davon der Antrieb 28 gesteuert und das Signal einer nicht gezeigten, von Laserscannern allgemein bekannten Winkelmesseinheit erfasst, die die jeweilige Winkelstellung der Abtasteinheit 24 bestimmt.

Aus den mittels Lichtlaufzeitverfahren bestimmten Abständen zu einem jeweiligen angetasteten Objekt und der Information über die Winkelstellung von der Winkelmesseinheit stehen nach jeder Scanperiode mit Winkel und Entfernung zweidimensionale Polarkoordinaten aller Objektpunkte in einer Abtastebene zur Verfügung. Die jeweilige Abtastebene ist über die Identität des jeweiligen remittierten Lichtstrahls 38 und dessen Erfassungsort auf dem Lichtempfänger 18 ebenfalls bekannt, so dass insgesamt ein dreidimensionaler Raumbereich abgetastet wird. Damit sind die Objektpositionen beziehungsweise Objektkonturen bekannt und können über eine Sensorschnittstelle 52 ausgegeben werden. Die Sensorschnittstelle 52 oder ein weiterer, nicht gezeigter Anschluss dienen umgekehrt als Parametrierschnittstelle.

Der Sensor 10 kann auch als Sicherheitssensor für einen Einsatz in der Sicherheitstechnik zur Überwachung einer Gefahrenquelle ausgebildet sein, wie sie beispielsweise eine gefährliche Maschine darstellt. Dabei wird ein Schutzfeld überwacht, das während des Betriebs der Maschine vom Bedienpersonal nicht betreten werden darf. Erkennt der Sensor 10 einen unzulässigen Schutzfeldeingriff, etwa ein Bein einer Bedienperson, so löst er einen Nothalt der Maschine aus. In der Sicherheitstechnik eingesetzte Sensoren 10 müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Insbesondere kann dann die Sensorschnittstelle 52 als sichere Ausgabeschnittstelle (OSSD, Output Signal Switching Device) ausgebildet sein, um bei einem Schutzfeldeingriff durch ein Objekt ein sicherheitsgerichtetes Abschaltsignal auszugeben.

Der dargestellte Sensor 10 ist ein Laserscanner mit rotierendem Messkopf, nämlich der Abtasteinheit 24. Alternativ ist auch eine periodische Ablenkung mittels Drehspiegel denkbar. Bei mehreren Sendelichtstrahlen 34 hat das aber den Nachteil, dass es von der jeweiligen Drehstellung abhängt, wie die mehreren Sendelichtstrahlen 34 in den Überwachungsbereich 14 fallen, denn deren Anordnung rotiert durch den Drehspiegel, wie bekannte geometrische Überlegungen ergeben. Eine weitere alternative Ausführungsform schwenkt die Abtasteinheit 24 hin und her, entweder anstelle der Drehbewegung oder zusätzlich um eine zweite Achse senkrecht zur Drehbewegung, um auch in Elevation eine Abtastbewegung zu erzeugen. Auch eine Ausgestaltung als Solid-State-Lidar ist möglich.

Figur 3 zeigt eine schematische Darstellung des zeitlichen Ablaufs einer Lichtlaufzeitmessung mit Fremdlichtbestimmung. Aufgetragen ist die Aktivität des Lichtsenders 12 beziehungsweise dessen ausgesandte Lichtintensität über der Zeit. Zunächst ist in einer Sendepause der Lichtsender 12 nicht aktiv, so dass der Lichtempfänger 18 ausschließlich Fremdlicht registriert. Das Empfangssignal ist während der Sendepause nicht von Nutzlicht überlagert, weil der Lichtsender 12 inaktiv ist, so dass das Empfangssignal unmittelbar als Fremdlichtsignal verwendet werden kann.

In einer vorzugsweise direkt anschließenden Messphase wird nun der Lichtsender 12 für eine Lichtlaufzeitmessung aktiviert. In der Messphase wird eine Überlagerung von Fremdlicht und Nutzlicht erfasst. Dabei wird bevorzugt in einer Art Burst-Betrieb nacheinander eine Vielzahl von Sendepulsen für eine entsprechende Vielzahl von Messwiederholungen ausgesandt und wieder empfangen. Damit wird ein Pulsmittelungsverfahren mit Mittelung über mehrere Messwiederholungen umgesetzt. Besonders bevorzugt wird das jeweilige Empfangssignal lediglich in zwei Zuständen binarisiert, beispielsweise mit einem kostengünstigen Komparator, und aus den jeweiligen Empfangspulsen ein Histogramm aufgebaut. Ein solches Pulsmittelungsverfahren ist in der einleitend genannten EP 1 972 961 A2 beschrieben. Alternativ wird nur ein einzelner Sendepuls ausgesandt und das Empfangssignal mit höherer Bittiefe abgetastet.

Am Ende der Messphase schließt sich eine Auswertungsphase an. Dies kann sich mit einer Sendepause für eine erneute Bestimmung des Fremdlichtsignals überschneiden beziehungsweise direkt darin übergehen. Es ist auch denkbar, das Fremdlichtsignal nicht vor jeder Messphase zu erfassen, einen jedenfalls einigermaßen statischen Fremdlichteinfall zu unterstellen und direkt in eine weitere Messphase überzugehen. Dabei kommt es dann auf die Leistungsfähigkeit der Auswertungselektronik an, wie dicht Messphasen nacheinander folgen können.

Alternativ zu einer sequentiellen Bestimmung des Fremdlichtsignals in einer Sendepause ist prinzipiell eine mehrkanalige Auswertungsstruktur vorstellbar. Die Erfindung zielt auf Fälle, in denen ein zweiter Auswertungskanal aus Kosten- oder Platzgründen nicht in Frage kommt.

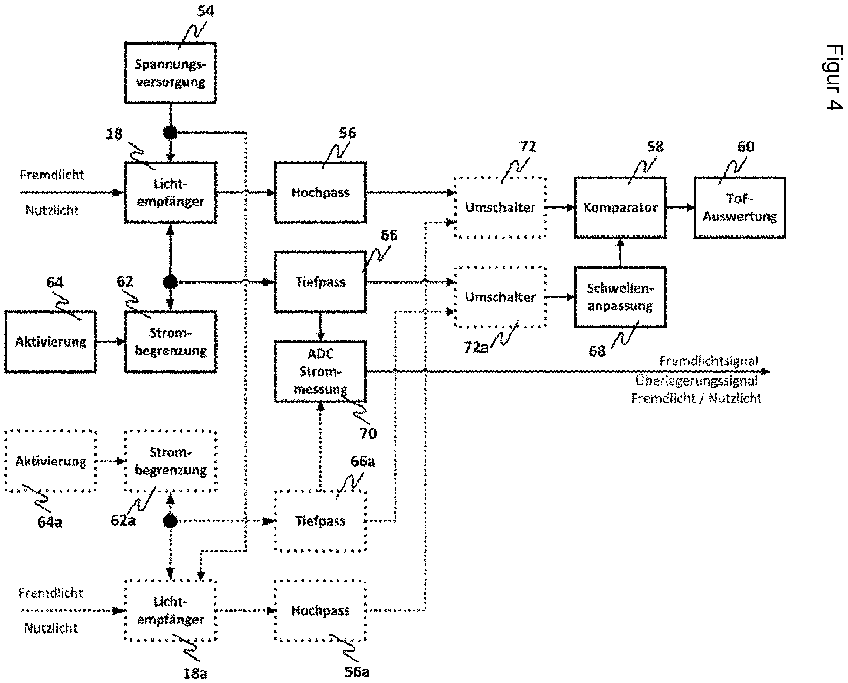

Figur 4 zeigt ein beispielhaftes Blockschaltbild für die Auswertung von einfallendem Licht, um eine Lichtlaufzeit und eine Fremdlicht- beziehungsweise Pegelinformation zu erfassen. Auf den Lichtempfänger 18, vorzugsweise als SiPM ausgestaltet, fällt in den Sendepausen nur Fremdlicht und während der Messungen eine Überlagerung aus Nutzlicht und Fremdlicht. Das Nutzlicht weist in einer bevorzugten Ausführungsform kurze Lichtpulse einer Breite von höchstens 2 ns auf. Das Fremdlicht hat typischerweise eine Bandbreite von 0-1 MHz. Der Lichtempfänger wird von einer Spannungsversorgung 54 mit einer Biasspannung vorgespannt, und zwar um eine gewisse Überspannung oberhalb der Durchbruchspannung der SPAD-Zellen.

Das Empfangssignal des Lichtempfängers 18 wird primär dem eigentlichen Messpfad zur Bestimmung der Lichtlaufzeit zugeführt, der sich in der Darstellung der Figur 4 nach rechts hin anschließt. Dort durchläuft das Empfangssignal zunächst einem Hochpassfilter 56 einer ersten Grenzfrequenz von beispielsweise mindestens 100 MHz. Es ist auf die kurzen Pulse abgestimmt, die der Lichtlaufzeitmessung zugrunde liegen. Das Hochpassfilter 56 bewirkt praktisch eine Differenzierung des Empfangssignals, die den kurzen Puls der weiteren Auswertung und präzisen zeitlichen Lokalisierung noch besser zugänglich macht. Anschließend erfolgt, sofern erforderlich, eine Impedanzanpassung und Pegelanhebung oder bei Bedarf auch Pegelabschwächung in einem nicht gezeigten Verstärker. Es sind weitere nicht gezeigte Filter zur weiteren Pulsformung denkbar, beispielsweise ein Bandpassfilter. Dessen Grenzfrequenzen sind optimiert zwischen den beiden Anforderungen eines möglichst geringen Messfehlers und einer guten Mehrechofähigkeit. Das Empfangssignal soll also in seiner zeitlichen Charakteristik möglichst unverfälscht bleiben und zugleich rasch ausschwingen, damit keine Pulse ineinanderlaufen und somit verschiedene hintereinander angeordnete Objekte getrennt werden können. Unter Umständen ist es sinnvoll, das Bandpassfilter durch höhere Ordnungen weiter zu optimieren.

Ein Komparator 58 vergleicht das jeweilige gefilterte Empfangssignal mit einer Komparatorschwelle, das dadurch binarisiert und im Anschluss digital weiterverarbeitet wird. Vorzugsweise wird aus den binarisierten Werten in Messwiederholungen mit mehreren ausgesandten Lichtsignalen ein Histogramm aufgebaut, entsprechend dem einleitend genannten Pulsmittelungsverfahren der EP 1 972 961 A2. Alternativ zu dem Komparator 58 kann ein AD-Wandler mit größerer Bittiefe eingesetzt sein. Der Umschalter 72 zwischen Hochpassfilter 56 und Komparator 58, dessen Funktion später noch erläutert wird, kann vorläufig als direkte Verbindung verstanden werden.

In einer anschließenden TOF-Auswertung 60 wird anhand des binarisierten Signals ein Histogramm gesammelt und damit die Lichtlaufzeit bestimmt. Alternativ wird anstelle des Histogramms ein mehrwertig abgetastetes Signal ausgewertet. Der Empfangspuls ist darin jeweils zeitlich präzise erhalten und herausgearbeitet, so dass ein Empfangszeitpunkt beispielsweise aus der ersten steigenden Flanke bestimmt werden kann. Alternative Verfahren zum Lokalisieren des Empfangspulses sind eine Schwerpunktbestimmung desjenigen Anteils eines Peaks, der sich über eine weitere Schwelle erhebt, ein Parabel- oder sonstiger Funktionsfit oder die Bestimmung eines Nulldurchgangs eines von den vorausgegangenen Filtern verursachten Überschwingers. Zusammen mit einer Information über den Sendezeitpunkt wird aus dem Empfangszeitpunkt die Lichtlaufzeit 60 und somit letztlich der Abstand zu dem Objekt 16 ermittelt.

Der in dem Lichtempfänger 18 fließende Strom wird in einer Strombegrenzung 62 überwacht. Wird von diesem Strom bei starkem Lichteinfall ein Grenzwert überschritten, so wird mittels einer Aktivierung 64 ein höherer Strom abgeschnitten oder gedämpft. Der in dem Lichtempfänger 18 fließende Strom oder ein Spannungssignal, das diesen Strom misst, wird außerdem einem Tiefpassfilter 66 einer Grenzfrequenz von beispielsweise höchstens 2 MHz zugeführt.

Dieses tiefpassgefilterte Signal kann einerseits in einer optionalen Schwellenanpassung 68 die Komparatorschwelle 58 anpassen. Die Komparatorschwelle sollte zumindest einmalig oder statisch angepasst sein, um allgemein die Empfindlichkeit der Lichtlaufzeitmessung festzulegen, und wird vorzugsweise dynamisch in Abhängigkeit von einem aktuellen Pegel oder Fremdlichteinfall nachgeführt.

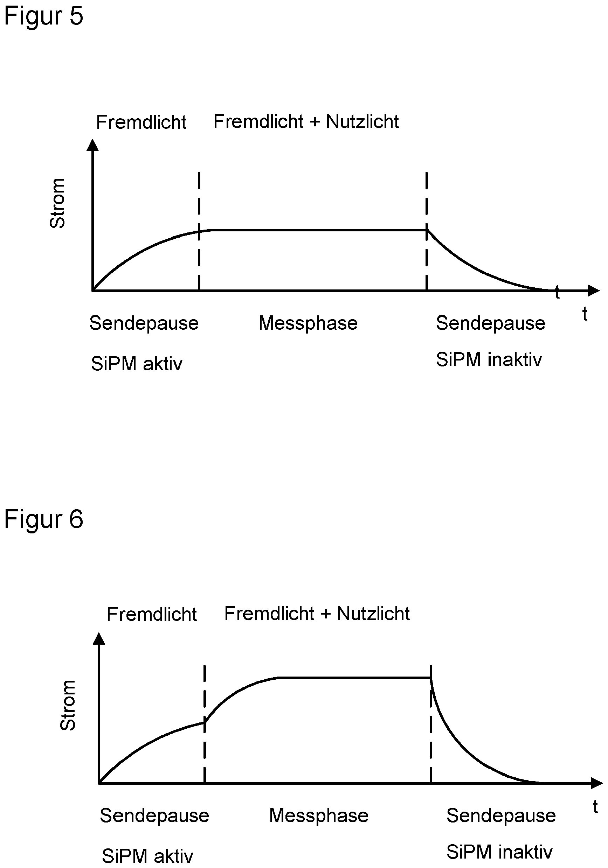

Andererseits wird das tiefpassgefilterte Signal in einem AD-Wandler 70 für die Strommessung abgetastet. Im Gegensatz zu dem Komparator 58 ist hier nach der Tiefpassfilterung keine hohe Zeitauflösung erforderlich. Dadurch sind die schnellen Veränderungen aufgrund des Lichtpulses ohnehin nicht mehr im Signal abgebildet. Der Zweck der Strommessung nach Tiefpassfilterung ist eine eher summarische Betrachtung des Pegels oder der Intensität des Lichteinfalls. Ein entsprechendes digitalisiertes Signal wird sowohl während der Sendepause für das Fremdlichtsignal als auch während der Messphase für das Messsignal erfasst, das dann eine Überlagerung von Fremdlicht und Nutzlicht ist. Die beiden Ströme können verglichen werden, um eine Pegelinformation abzuleiten, wie im Anschluss unter Bezugnahme auf die Figuren 5 und 6 noch erläutert wird.

In einigen Ausführungsformen weist der Lichtempfänger 18 mehrere Empfangskanäle auf. Das können verschiedene SPAD-Zellen, Gruppen von SPAD-Zellen oder mehrere SiPMs sein, die jeweils ein Summensignal als Empfangssignal erzeugen. Ein unter Bezugnahme auf Figur 2 erläuterter Mehrscanner beispielsweise erzeugt mit einer derartigen Vielzahl von Empfangskanälen ein Empfangssignal je Scanlage. Es ist denkbar, die vorgestellte Auswertungsstruktur entsprechend zu vervielfältigen. Bevorzugt wird aber die Auswertung mit jeweils einem anderen Empfangskanal verbunden, beispielsweise mittels Multiplexing.

Figur 4 deutet einen weiteren Empfangskanal, von denen es noch mehr geben kann, in gestrichelten Blöcken an. Der weitere Empfangskanal weist einen weiteren Lichtempfänger 18a auf, der wie erläutert abweichend von der Darstellung in räumlicher Nähe zum Lichtempfänger 18a angeordnet beziehungsweise durch eine andere Gruppe von SPAD-Zellen desselben Lichtempfängers gebildet sein kann. Zu dem Empfangskanal gehört weiterhin eine eigene Strombegrenzung 62a mit Aktivierung 64a sowie vorzugsweise ein eigenes Tiefpassfilter 66a beziehungsweise Hochpassfilter 56a. Ein jeweiliger Umschalter 72, 72a schaltet zwischen den Empfangskanälen um. Die Aktivierung 64, 64a kann für die entsprechende Versorgung mit einer Biasspannung der betroffenen Bereiche des Lichtempfängers 18, 18a sorgen.

Figur 5 zeigt einen schematischen zeitlichen Verlauf eines durch den Lichtempfänger 18 fließenden Stroms, also das Ausgangssignal des AD-Wandlers 70, bei Erfassung eines natürlichen Objekts 16. Wie zu Figur 4 erläutert, ist das Signal tiefpassgefiltert. In der anfänglichen Sendepause wird der Lichtempfänger 18 bereits aktiviert, d.h. mit einer Biasspannung oberhalb der Durchbruchspannung vorgespannt. Aufgrund von Fremdlichtereignissen steigt der Strom auch bei inaktivem Lichtsender 12 und somit ohne Sendepulse schon auf einen gewissen Pegel an. Dieses Fremdlichtsignal wird mittels AD-Wandler 70 erfasst.

In der anschließenden Messphase ist der Lichtsender 12 aktiviert. Der gemessene Strom entspricht einer Überlagerung aus Fremdlicht und Nutzlicht. Die Empfangspulse sind als solche in Figur 5 wegen des Tiefpassfilters 66 nicht zu sehen, ihre langsamen Anteile tragen aber prinzipiell zu einer Anhebung des Pegels bei. Allerdings ist der zusätzliche Nutzlichtbeitrag wegen der bereits durch das Fremdlicht ausgelösten Zellen in dem Lichtempfänger bei einem natürlichen Objekt 16 gering.

Nach der Messphase werden sowohl der Lichtsender 12 als auch der Lichtempfänger 18 deaktiviert. Der gemessene Strom klingt noch ab. Diese Abklingphase könnte zur weiteren Auswertung mit herangezogen werden, liefert aber letztlich keine neue Information über den Pegel am Ende der Messphase hinaus.

Figur 6 zeigt einen schematischen zeitlichen Verlauf eines durch den Lichtempfänger 18 fließenden Stroms nun bei Erfassung eines Reflektors als Objekt 16. Die einzelnen Phasen sind die gleichen wie soeben zu Figur 5 beschrieben. Allerdings steigt der Pegel während der Messphase wegen des von dem Reflektor erzeugten hochenergetischen Empfangspulses deutlich höher an.

Somit kann zunächst in der Sendepause der Fremdlichtstrom ermittelt werden. Während der Messphase wird der von einer Überlagerung aus Fremdlicht und Nutzlicht erzeugte Strom gemessen. Die Differenz der beiden Ströme lässt einen Schluss auf die Stärke des Empfangssignals zu, sie ist eine Pegelinformation des Nutzlichts. Ganz allgemein kann daraus durch entsprechende Reskalierung ein Remissionsvermögen des Objekts 16 bestimmt werden. Ein sehr deutlich erhöhter Strom wird als Reflektor interpretiert. In einer besonders vorteilhaften Ausführungsform wird lediglich zwischen einem natürlichen Objekt und einem Reflektor unterschieden, indem die Differenz der beiden Ströme während der Sendepause und während der Messphase mit einer Reflektorschwelle verglichen wird. Eine überschwellige Differenz der Ströme bedeutet Reflektor, eine unterschwellige Differenz der Ströme bedeutet ein natürliches Ziel. Im letzteren Fall ist noch zu ergänzen, dass überhaupt ein Abstand bestimmt worden sein muss, ansonsten ist möglicherweise der Überwachungsbereich 14 leer. Im Falle einer Mehrecho- oder Mehrzielauswertung kann wegen der Tiefpassfilterung und langsamen Abtastung nicht ermittelt werden, aus welchem der mehreren Echos das hochenergetische Ereignis stammt. Hier wird davon ausgegangen, dass hinter einem starken Ereignis kein weiteres mehr stattfinden kann und vorangehende Ereignisse lediglich niederenergetische Störechos beispielsweise durch eine Frontscheibenverschmutzung, Regentropfen oder Nebel sind. Als Reflektor wird folglich das jeweilige erste starke Echo angenommen.

Die Pegelinformation oder speziell das Remissionsvermögen beziehungsweise eine Reflektorinformation können für interne Korrekturen und Anpassungen verwendet werden. Als ein Beispiel wird eine Farb- oder Schwarzweißkorrekturvorgenommen, d.h. die Lichtlaufzeit je nach Pegel korrigiert. Die erforderlichen Korrekturwerte können mit einem Graukeil eingelernt und als Korrekturtabelle oder -funktion hinterlegt sein. Weiterhin ist denkbar, das Verfahren zur Lichtlaufzeitmessung anzupassen, beispielsweise für dunkle Ziele, helle Ziele und Reflektoren jeweils andere Algorithmen zu verwenden. Alternativ oder zusätzlich werden die Pegelinformation, das Remissionsvermögen oder eine Reflektorinformation als Messgröße ausgegeben. Die Reflektorinformation kann insbesondere als binäres Flag ausgegeben werden.

## Patentansprüche

1. Entfernungsmessender optoelektronischer Sensor (10) zur Erfassung und Abstandsbestimmung eines Objekts (16) in einem Überwachungsbereich (14), der einen Lichtsender (12) zum Aussenden eines Lichtsignals (34), einen Lichtempfänger (18) mit mindestens einem Lichtempfangselement (20) zum Erzeugen eines Empfangssignals aus dem von dem Objekt (16) remittierten Lichtsignal (38) sowie eine Steuer- und Auswerteeinheit (22) aufweist, die dafür ausgebildet ist, aus dem Empfangssignal eine Lichtlaufzeit und damit den Abstand des Objekts (16) zu bestimmen sowie ein Fremdlichtsignal des auf den Lichtempfänger (18) auftreffenden Fremdlichts als Empfangssignal in einer Sendepause bei inaktivem Lichtsender (12) zu erfassen, in einer zu der Sendepause zeitversetzten Messphase mit aktivem Lichtsender (12) als Messignal das Empfangssignal zu erfassen, um aus dem Messsignal die Lichtlaufzeit zu bestimmen, und durch Vergleich von Messsignal und Fremdlichtsignal eine Pegelinformation des remittierten Lichtsignals (38) zu ermitteln,
**dadurch gekennzeichnet,**
**dass** die Steuer- und Auswertungseinheit (22) ein Tiefpassfilter (66) mit einer Grenzfrequenz von höchstens 2 MHz aufweist, dem das Messsignal und das Fremdlichtsignal vor Ermittlung der Pegelinformation zugeführt werden, dass somit das tiefpassgefilterte Fremdlichtsignal und das tiefpassgefilterte Messsignal miteinander verglichen werden, um die Pegelinformation des remittierten Lichtsignals (38) zu ermitteln und dass das Messsignal für die Lichtlaufzeitmessung auch noch einem anderen Pfad ohne das Tiefpassfilter (66) zugeführt wird.

2. Sensor (10) nach Anspruch 1,
wobei das Lichtempfangselement (20) mit einer Vorspannung oberhalb einer Durchbruchspannung vorgespannt und somit in einem Geiger-Modus betrieben ist.

3. Sensor (10) nach Anspruch 1 oder 2,
wobei die Steuer- und Auswertungseinheit (22) dafür ausgebildet ist, anhand der Pegelinformation festzustellen, ob das Objekt (16) ein Reflektor ist.

4. Sensor (10) nach einem der vorhergehenden Ansprüche,
wobei die Steuer- und Auswertungseinheit (22) dafür ausgebildet ist, die Pegelinformation mit einer Reflektorschwelle zu vergleichen.

5. Sensor (10) nach Anspruch 4,
wobei die Steuer- und Auswertungseinheit (22) dafür ausgebildet ist, die Reflektorschwelle an einen gemessenen Abstand anzupassen.

6. Sensor (10) nach einem der vorhergehenden Ansprüche,
wobei die Steuer- und Auswertungseinheit (22) dafür ausgebildet ist, aus der Pegelinformation das Remissionsvermögen des Objekts (16) zu bestimmen, insbesondere mit einer Korrektur anhand des gemessenen Abstands.

7. Sensor (10) nach einem der vorhergehenden Ansprüche,
wobei die Steuer- und Auswertungseinheit (22) dafür ausgebildet ist, die Pegelinformation oder eine aus der Pegelinformation abgeleitete Information auszugeben, insbesondere ob das Objekt (16) ein Reflektor ist oder ein Remissionsvermögen des Objekts (16).

8. Sensor (10) nach einem der vorhergehenden Ansprüche,
wobei die Steuer- und Auswertungseinheit (22) dafür ausgebildet ist, die Bestimmung der Lichtlaufzeit auf Basis der Pegelinformation oder einer daraus abgeleiteten Information anzupassen, insbesondere auf Basis der Information, dass das Objekt (16) ein Reflektor ist, oder eines Remissionsvermögens des Objekts (16).

9. Sensor (10) nach einem der vorhergehenden Ansprüche,
wobei die Steuer- und Auswertungseinheit (22) dafür ausgebildet ist, das Fremdlichtsignal auszugeben.

10. Sensor (10) nach einem der vorhergehenden Ansprüche,
wobei die Steuer- und Auswertungseinheit (22) dafür ausgebildet ist, als Fremdlichtsignal und Messsignal jeweils einen in dem Lichtempfänger (18) fließenden Strom zu messen.

11. Sensor (10) nach einem der vorhergehenden Ansprüche,
wobei die Steuer- und Auswertungseinheit (22) einen AD-Wandler (70) aufweist, um das Messsignal und das Fremdlichtsignal für die Ermittlung der Pegelinformation zu digitalisieren, wobei die Auflösung des AD-Wandlers (70) nur für eine A/D-Wandlung zuvor tiefpassgefilterter Signale ausreicht und nicht die schnellen Empfangssignale für die Lichtlaufzeitmessung erfassen kann.

12. Sensor (10) nach einem der vorhergehenden Ansprüche,
wobei die Steuer- und Auswertungseinheit (22) einen Auswertungskanal für die Bestimmung der Lichtlaufzeit und der Pegelinformation aufweist, der mittels eines Umschalters (72) mit verschiedenen Lichtempfangselementen (20) oder Gruppen von Lichtempfangselementen (20) verbunden werden kann.

13. Sensor (10) nach einem der vorhergehenden Ansprüche,
der als Laserscanner ausgebildet ist, insbesondere als Mehrlagenscanner, und der eine bewegliche Ablenkeinheit (24) aufweist, mit deren Hilfe die Lichtsignale (34) periodisch durch den Überwachungsbereich (14) geführt werden.

14. Verfahren zur optischen Erfassung und Abstandsbestimmung eines Objekts (16) in einem Überwachungsbereich (14), wobei ein Lichtsender (12) ein Lichtsignal (34) aussendet, ein Lichtempfänger (18), der mindestens ein Lichtempfangselement (20) aufweist, aus dem von dem Objekt (16) remittiertem Lichtsignal (38) ein Empfangssignal erzeugt und aus dem Empfangssignal eine Lichtlaufzeit und damit der Abstand des Objekts (16) bestimmt wird, ein Fremdlichtsignal des auf den Lichtempfänger (18) auftreffenden Fremdlichts als Empfangssignal in einer Sendepause bei inaktivem Lichtsender (12) erfasst wird, in einer zu der Sendepause zeitversetzten Messphase mit aktivem Lichtsender (12) als Messignal das Empfangssignal erfasst wird, um aus dem Messsignal die Lichtlaufzeit zu bestimmen, und durch Vergleich von Messsignal und Fremdlichtsignal eine Pegelinformation des remittierten Lichtsignals (38) ermittelt wird,
**dadurch gekennzeichnet,**
**dass** das Messsignal und das Fremdlichtsignal vor Ermittlung der Pegelinformation einem Tiefpassfilter (66) mit einer Grenzfrequenz von höchstens 2 MHz zugeführt werden, dass somit das tiefpassgefilterte Fremdlichtsignal und das tiefpassgefilterte Messsignal miteinander verglichen werden, um die Pegelinformation des remittierten Lichtsignals (38) zu ermitteln, und dass das Messsignal für die Lichtlaufzeitmessung auch noch einem anderen Pfad ohne das Tiefpassfilter (66) zugeführt wird.

15. Verfahren nach Anspruch 14,
wobei das mindestens eine Lichtempfangselement (20) mit einer Vorspannung oberhalb einer Durchbruchspannung vorgespannt und somit in einem Geiger-Modus betrieben wird.

## Claims

1. A distance-measuring optoelectronic sensor (10) for detecting and determining the distance of an object (16) in a monitoring area (14), the sensor (10) comprising a light transmitter (12) for transmitting a light signal (34), a light receiver (18) having at least one light-receiving element (20) for generating a received signal from the remitted light signal (38) remitted by the object (16), and a control and evaluation unit (22) configured to determine a light time of flight and thus the distance of the object (16) from the received signal and to detect an ambient light signal of the ambient light impinging on the light receiver (18) as a received signal in a transmission pause when the light transmitter (12) is inactive, to detect the received signal as a measurement signal in a measurement phase with an active light transmitter (12) which is offset in time with respect to the transmission pause, in order to determine the light time of flight from the measurement signal, and to determine level information of the remitted light signal (38) by comparing the measurement signal and the ambient light signal, **characterized in that** the control and evaluation unit (22) comprises a low-pass filter (66) having a cut-off frequency of at most 2 MHz, to which the measurement signal and the ambient light signal are fed before the level information is determined, **in that** the low-pass-filtered ambient light signal and the low-pass-filtered measurement signal are thus compared with one another in order to determine the level information of the remitted light signal (38), and **in that** the measurement signal for the time of flight measurement is also fed to another path without the low-pass filter (66).

2. The sensor (10) according to claim 1,
wherein the light-receiving element (20) is biased with a bias voltage above a breakdown voltage and is thus operated in a Geiger mode.

3. The sensor (10) according to claim 1 or 2,
wherein the control and evaluation unit (22) is configured to use the level information to determine whether the object (16) is a reflector.

4. The sensor (10) according to any of the preceding claims,
wherein the control and evaluation unit (22) is configured to compare the level information with a reflector threshold.

5. The sensor (10) according to claim 4,
wherein the control and evaluation unit (22) is configured to adapt the reflector threshold to a measured distance.

6. The sensor (10) according to any of the preceding claims,
wherein the control and evaluation unit (22) is configured to determine the reflectivity of the object (16) from the level information, in particular with a correction based on the measured distance.

7. The sensor (10) according to any of the preceding claims,
wherein the control and evaluation unit (22) is configured to output the level information or information derived from the level information, in particular whether the object (16) is a reflector or a reflectivity of the object (16).

8. The sensor (10) according to any of the preceding claims,
wherein the control and evaluation unit (22) is configured to adapt the determination of the light time of flight on the basis of the level information or an information derived therefrom, in particular on the basis of the information that the object (16) is a reflector, or a reflectivity of the object (16).

9. The sensor (10) according to any of the preceding claims,
wherein the control and evaluation unit (22) is configured to output the ambient light signal.

10. The sensor (10) according to any of the preceding claims,
wherein the control and evaluation unit (22) is configured to measure a current flowing in the light receiver (18) as ambient light signal and measurement signal, respectively.

11. The sensor (10) according to any of the preceding claims,
wherein the control and evaluation unit (22) comprises an AD converter (70) for digitizing the measurement signal and the ambient light signal for determining the level information, wherein the resolution of the AD converter (70) is only sufficient for an AD conversion of previously low-pass filtered signals and cannot detect the fast received signals for the time of flight measurement.

12. The sensor (10) according to any of the preceding claims,
wherein the control and evaluation unit (22) comprises an evaluation channel for determining the light time of flight and the level information, which can be connected to different light-receiving elements (20) or groups of light-receiving elements (20) by means of a switch (72).

13. The sensor (10) according to any of the preceding claims,
which is configured as a laser scanner, in particular as a multi-layer scanner, and which comprises a movable deflection unit (24), with the aid of which the light signals (34) are periodically guided through the monitoring area (14).

14. A method for optically detecting and determining the distance of an object (16) in a monitoring area (14), wherein a light transmitter (12) transmits a light signal (34), a light receiver (18) having at least one light-receiving element (20) generates a received signal from the remitted light signal (38) remitted by the object (16), and a light time of flight and thus the distance of the object (16) is determined from the received signal, an ambient light signal of the ambient light impinging on the light receiver (18) being detected as a received signal in a transmission pause when the light transmitter (12) is inactive, the received signal being detected with an active light transmitter (12) as a measurement signal in a measurement phase offset in time with respect to the transmission pause in order to determine the light time of flight from the measurement signal, and level information of the transmitted light signal (38) being determined by comparing the measurement signal and the ambient light signal,
**characterized in that** the measurement signal and the ambient light signal are fed to a low-pass filter (66) having a cut-off frequency of at most 2 MHz before the level information is determined, **in that** the low-pass-filtered ambient light signal and the low-pass-filtered measurement signal are thus compared with one another in order to determine the level information of the remitted light signal (38), and **in that** the measurement signal for the time of flight measurement is also fed to another path without the low-pass filter (66).

15. The method according to claim 14,
wherein the at least one light-receiving element (20) is biased with a bias voltage above a breakdown voltage and is thus operated in a Geiger mode.

## Revendications

1. Capteur optoélectronique de mesure de distance (10) pour détecter et déterminer la distance d'un objet (16) dans une zone de surveillance (14), comprenant un émetteur de lumière (12) pour l'émission d'un signal lumineux (34), un récepteur de lumière (18) avec au moins un élément de réception de lumière (20) pour générer un signal de réception à partir du signal lumineux (38) émis par l'objet (16) ainsi qu'une unité de commande et d'évaluation (22) configurée pour déterminer un temps de vol de la lumière et donc la distance de l'objet (16) par rapport au signal de réception ainsi que de détecter un signal de lumière ambiante de la lumière ambiante arrivant sur le récepteur de lumière (18) en tant que signal de réception dans une pause d'émission lorsque l'émetteur de lumière (12) est inactif, de détecter le signal de réception en tant que signal de mesure dans une phase de mesure décalée par rapport à la pause d'émission avec un émetteur de lumière actif (12), afin de déterminer le temps de vol de la lumière à partir du signal de mesure et de déterminer une information de niveau du signal lumineux émis (38) en comparant le signal de mesure et le signal lumineux ambiant,
**caractérisé en ce que**
l'unité de commande et d'évaluation (22) comprend un filtre passe-bas (66) avec une fréquence limite de 2 MHz au maximum, auquel le signal de mesure et le signal lumineux ambiante sont alimentés avant la détermination de l'information de niveau, **en ce que** le signal lumineux ambiant filtré par un filtre passe-bas et le signal de mesure filtré par un filtre passe-bas sont ainsi comparés l'un à l'autre afin de déterminer l'information de niveau du signal lumineux émis (38), et **en ce que** le signal de mesure pour la mesure du temps de vol est également alimenté à un autre chemin sans le filtre passe-bas (66).

2. Capteur (10) selon la revendication 1,
dans lequel l'élément de réception de lumière (20) est accouplé avec une tension de polarisation supérieure à une tension de claquage et fonctionne donc en mode Geiger.

3. Capteur (10) selon la revendication 1 ou 2,
dans lequel l'unité de commande et d'évaluation (22) est configurée pour déterminer, à l'aide de l'information de niveau, si l'objet (16) est un réflecteur.

4. Capteur (10) selon l'une des revendications précédentes,
dans lequel l'unité de commande et d'évaluation (22) est configurée pour comparer l'information de niveau à un seuil de réflecteur.

5. Capteur (10) selon la revendication 4,
dans lequel l'unité de commande et d'évaluation (22) est configurée pour adapter le seuil du réflecteur à une distance mesurée.

6. Capteur (10) selon l'une des revendications précédentes,
dans lequel l'unité de commande et d'évaluation (22) est configurée pour déterminer la capacité de réflexion de l'objet (16) à partir de l'information de niveau, en particulier avec une correction à l'aide de la distance mesurée.

7. Capteur (10) selon l'une des revendications précédentes,
dans lequel l'unité de commande et d'évaluation (22) est configurée pour distribuer l'information de niveau ou une information dérivée de l'information de niveau, en particulier si l'objet (16) est un réflecteur ou une capacité de réflexion de l'objet (16).

8. Capteur (10) selon l'une des revendications précédentes,
dans lequel l'unité de commande et d'évaluation (22) est configurée pour adapter la détermination du temps de vol de la lumière sur la base de l'information de niveau ou d'une information dérivée de celle-ci, en particulier sur la base de l'information selon laquelle l'objet (16) est un réflecteur, ou une capacité de réflexion de l'objet (16).

9. Capteur (10) selon l'une des revendications précédentes,
dans lequel l'unité de commande et d'évaluation (22) est configurée pour émettre le signal lumineux ambiante.

10. Capteur (10) selon l'une des revendications précédentes,
dans lequel l'unité de commande et d'évaluation (22) est configurée pour mesurer en tant que signal lumineux ambiante et signal de mesure, respectivement un courant circulant dans le récepteur de lumière (18).

11. Capteur (10) selon l'une des revendications précédentes,
dans lequel l'unité de commande et d'évaluation (22) comprend un convertisseur AD (70) pour numériser le signal de mesure et le signal lumineux ambiante afin de déterminer l'information de niveau, la résolution du convertisseur AD (70) ne suffisant que pour une conversion AD de signaux préalablement filtrés en passe-bas et ne pouvant pas détecter les signaux de réception rapides pour la mesure du temps de vol de la lumière.

12. Capteur (10) selon l'une des revendications précédentes,
dans lequel l'unité de commande et d'évaluation (22) comprend un canal d'évaluation pour déterminer le temps de vol de la lumière et l'information de niveau, qui peut être connecté à différents éléments de réception de lumière (20) ou groupes d'éléments de réception de lumière (20) au moyen d'un commutateur (72).

13. Capteur (10) selon l'une des revendications précédentes,
qui est configuré comme un scanner laser, en particulier comme un scanner multicouche, et qui comprend une unité de déviation mobile (24), à l'aide de laquelle les signaux lumineux (34) sont périodiquement guidés à travers la zone de surveillance (14).

14. Procédé de détection optique et de détermination de la distance d'un objet (16) dans une zone de surveillance (14), dans lequel un émetteur de lumière (12) émet un signal lumineux (34), un récepteur de lumière (18) comprenant au moins un élément de réception de lumière (20), génère un signal de réception à partir du signal lumineux (38) émis par l'objet (16), et un temps de vol de la lumière et donc la distance de l'objet (16) sont déterminés à partir du signal de réception, un signal de lumière ambiante de la lumière ambiante arrivant sur le récepteur de lumière (18) est détecté en tant que signal de réception dans une pause d'émission lorsque l'émetteur de lumière (12) est inactif, le signal de réception est détecté en tant que signal de mesure dans une phase de mesure décalée par rapport à la pause d'émission avec un émetteur de lumière actif (12), afin de déterminer le temps de vol de la lumière à partir du signal de mesure, et une information de niveau du signal lumineux émis (38) est déterminée en comparant le signal de mesure et le signal lumineux ambiant,
**caractérisé en ce que**
le signal de mesure et le signal lumineux ambiant sont alimentés avant la détermination de l'information de niveau à un filtre passe-bas (66) avec une fréquence limite de 2 MHz au maximum, **en ce que** le signal lumineux ambiant filtré par un filtre passe-bas et le signal de mesure filtré par un filtre passe-bas sont ainsi comparés l'un à l'autre afin de déterminer l'information de niveau du signal lumineux émis (38), et **en ce que** le signal de mesure pour la mesure du temps de vol est également alimenté à un autre chemin sans le filtre passe-bas (66).

15. Procédé selon la revendication 14,
dans lequel l'au moins un élément de réception de lumière (20) est accouplé avec une tension de polarisation supérieure à une tension de claquage et fonctionne donc en mode Geiger.
